**Europäisches Patentamt**

**European Patent Office**

**Office européen des brevets**

(11) Veröffentlichungsnummer: **0 306 752**
**A2**

(12) **EUROPÄISCHE PATENTANMELDUNG**

(21) Anmeldenummer: **88113534.7**

(22) Anmeldetag: **20.08.88**

(51) Int. Cl.4: **F16F 13/00**

(30) Priorität: **10.09.87 DE 3730425**

(43) Veröffentlichungstag der Anmeldung:
**15.03.89 Patentblatt 89/11**

(84) Benannte Vertragsstaaten:
**DE ES FR GB IT SE**

(71) Anmelder: **METZELER Gesellschaft mit
beschränkter Haftung
Gneisenaustrasse 15
D-8000 München 50(DE)**

(72) Erfinder: **Hofmann, Manfred
Gerhard v. Dietz-Strasse 15
D-6257 Hünfelden(DE)**

(74) Vertreter: **Michelis, Theodor, Dipl.-Ing.
Gneisenaustrasse 15
D-8000 München 50(DE)**

(54) **Hydraulisch dämpfendes Motorlager.**

(57) Bei einem hydraulisch dämpfenden Motorlager mit einer von einer kegelstumpfförmigen, elastomeren Tragfeder umgebenen Arbeitskammer und einer von einer weichelastischen, tassenförmigen Membran begrenzten Ausgleichskammer, die über einen kreisringförmigen Überströmkanal im Bereich einer zwischen den Kammern angeordneten Trennwand hydraulisch miteinander in Verbindung stehen, ist zur Erhöhung der Reibung für die hydraulische Flüssigkeit im Überströmkanal erfindungsgemäß vorgesehen, daß innerhalb des angenähert rechteckigen Querschnitt aufweisenden Überströmkanals (12) mindestens eine, sich vertikal über eine Teilhöhe des Kanals (12) und in Umfangsrichtung erstreckende, stegförmige Zwischenwandung (13) angeordnet ist.

FIG.1

## Hydraulisch dämpfendes Motorlager

Die Erfindung bezieht sich auf ein hydraulisch dämpfendes Motorlager mit einer von einer kegelstumpfförmigen, elastomeren Tragfeder umgebenen Arbeitskammer und einer von einer weichelastischen, tassenförmigen Membran begrenzten Ausgleichskammer, die über einen kreisringförmigen Überströmkanal im Bereich einer zwischen den Kammern angeordneten Trennwand hydraulisch miteinander in Verbindung stehen.

Ein derartiges Lager ist aus der EP-PS 0 040 290 bekannt. Der dabei zwischen der Arbeitskammer und der Ausgleichskammer verlaufende kreisförmige lange Überströmkanal bewirkt durch die in ihm gespeicherte Flüssigkeitssäule bei Einleiten von Schwingungen größerer Amplitude eine hohe Dämpfung, die einmal durch die Menge der im Überströmkanal gespeicherten Flüssigkeit und zum anderen durch die Reibung der Flüssigkeit an den Kanalwandungen bedingt ist. Die damit erreichte hydraulische Dämpfung ist zwar relativ hoch, aber sehr schmalbandig, d.h. das Dämpfungsmaximum erstreckt sich nur über ein schmales Frequenzband.

Der Erfindung liegt demgegenüber die Aufgabe zugrunde, ein Motorlager zu schaffen, das ebenfalls eine hohe Dämpfung aufweist, wobei sich diese Dämpfung aber über ein breites Frequenzband erstreckt, d.h. sehr viel breitbandiger ist, als das bisher mit der Ausbildung eines "lan gen" Überströmkanals möglich war.

Zur Lösung dieser Aufgabe ist erfindungsgemäß vorgesehen, daß innerhalb des angenähert rechteckigen Querschnitt aufweisenden Überströmkanals mindestens eine, sich vertikal über eine Teilhöhe des Kanals und im Umfangsrichtung desselben erstreckende, stegförmige Zwischenwandung angeordnet ist.

Durch eine derartige Zwischenwandung wird die Oberfläche des Kanals bei angepaßtem hydraulischen Querschnitt vergrößert und damit die Reibungsanteile der Kanalströmung erhöht. Dadurch kann bei gleicher Frequenzlage des Maximums der Dämpfung eine erheblich größere Breitbandigkeit erreicht werden.

Zweckmäßig ist es dabei, wenn der Überströmkanal in die einen Teil der Arbeitskammer begrenzende metallische Kammerwandung eingelassen ist und eine sich spiralförmig nach innen zur Arbeitskammer öffnende Eintrittsöffnung und eine vom Boden des Kanals ausgehende und in die Ausgleichskammer mündende Austrittsöffnung aufweist.

Bei Anordnung von zwei oder mehr Zwischenwandungen sollten diese parallel und in gleichmäßigen Abständen zueinander zur Begrenzung von Teilkanälen gleichen Querschnitts angeordnet sein.

Um einen störungsfreien Ein- und Austritt der hydraulischen Flüssigkeit am Kanal zu erreichen, ist es ferner zweckmäßig, wenn im Bereich der Eintritts- und Austrittsöffnung die Zwischenwandungen freigeschnitten sind.

Anhand einer schematischen Zeichnung sind Aufbau und Wirkungsweise von Ausführungsbeispielen nach der Erfindung näher erläutert. Dabei zeigen

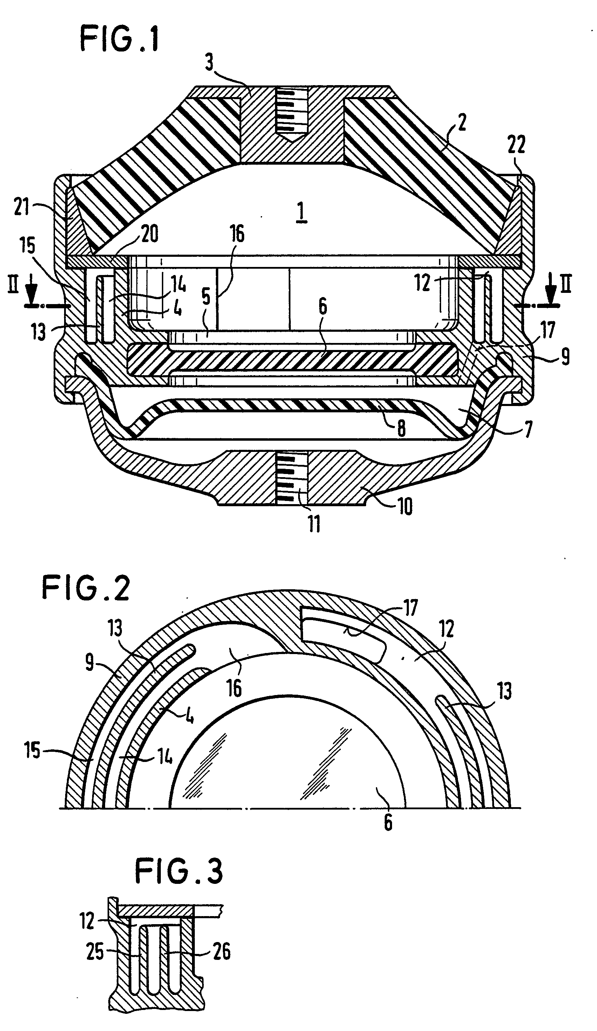

Fig. 1 einen Längsschnitt durch ein Motorlager,

. Fig. 2 einen Querschnitt durch eine Hälfte des Motorlagers entsprechend der Schnittlinie II-II nach Fig. 1 und

Fig. 3 einen Teillängsschnitt mit einer abgewandelten Ausbildung des Überströmkanals.

Wie man aus dem Längsschnitt nach Fig. 1 ersieht, weist das Motorlager eine Arbeitskammer 1 auf, die auf der Oberseite von einer kegelstumpfförmigen elastomeren Tragfeder 2 mit einer zentralen Lagerplatte 3 zum Anschluß des nicht näher dargestellten Motors und im unteren Bereich von der Kammerwandung 4 sowie einer in der horizontalen Trennwand 5 eingespannten Entkopplungsmembran 6 begrenzt ist. Auf der anderen Seite der Trennwand 5 befindet sich eine Ausgleichskammer 7, die von einer weichelastischen, tassenförmigen Membran 8 begrenzt und nach außen durch einen im Gehäuse 9 gehaltenen Deckel 10 mit einer Gewindebohrung 11 zum Anschluß an die Fahrzeugkarosserie abgedeckt ist. Arbeitskammer 1 und Ausgleichskammer 7 stehen dabei über einen kreisringförmigen Kanal 12, der anschließend näher beschrieben wird, hydraulisch miteinander in Verbindung.

Dieser Überströmkanal 12 ist zweckmäßigerweise von oben in den verstärkten Gehäusewandungsbereich 9 eingeschnitten und so ausgebildet, daß in der Mitte eine sich über eine Teilhöhe des Kanals erstreckende Zwischenwandung 13 stehenbleibt. Das bedeutet, daß der an sich angenähert rechteckig ausgebildete Überströmkanal 12 durch diese Zwischenwandung 13 in zwei Teilkanäle 14 und 15 unterteilt ist. Diese Zwischenwandung 13 kann dabei eine den jeweiligen Anforderungen entsprechende Höhe aufweisen. Wesentlich ist jedoch, daß durch diese Zwischenwandung 13 die möglichen Wandreibungsflächen für die Flüssigkeit im Überströmkanal 12 vergrößert werden, wodurch eine sehr viel breitbandigere Dämpfung erreicht wird.

Wie man insbesondere aus dem Querschnitt nach Fig. 2 ersieht, weist der Kanal 12 eine sich spiralförmig nach innen zur Arbeitskammer 1 öffnende Eintrittsöffnung 16 auf, wobei die Zwischenwandung 13 an der innenliegenden Kante der Kammerwandung 4 endet. Am anderen Ende des kreisringförmig verlaufenden Überströmkanals 12 ist dann eine vom Boden des Kanals 12 ausgehende Austrittsöffnung 17 vorgesehen, die die hydraulische Verbindung zur Ausgleichskammer 7 herstellt. Auch am Austrittsende des Überströmkanals 12 endet die Zwischenwandung 13 im vorgegebenen Abstand von der Austrittsöffnung 17, um ein wirbelfreies Ausströmen sicherzustellen.

Der Überströmkanal 12 ist dann auf der Oberseite mit einem Ring 20 abgedeckt, bevor die eigentliche Tragfeder 2 mit dem gehafteten Ring 21 aufgesetzt und das Gehäuse 9 an der Oberkante 22 nach innen umgebörtelt wird und damit eine flüssigkeitsdichte Verbindung gewährleistet.

In Fig. 3 ist in einem Teilquerschnitt durch den Kanal 12 eine weitere Ausgestaltungsmöglichkeit beschrieben, bei der zwei Zwischenwände 25 und 26 angeordnet sind, die entsprechende Teilkanäle zwischen sich begrenzen. Durch eine solche Anordnung von zwei Zwischenwänden kann damit die Reibung für die Kanalströmung bei gleichem Kanalquerschnitt noch weiter erhöht werden.

Selbstverständlich ist es möglich, die beschriebenen Zwischenwandungen im Überströmkanal auch auf andere Weise herzustellen, wie beispielsweise als im Kanal montierte Einsätze, die auch von dem oberen Abdeckring ausgehen können und damit eine besondere Freizügigkeit und nachträgliche Änderung ermöglichen.

Ingesamt ist es also mit der Anordnung einer derartigen Zwischenwandung in einem Überströmkanal hydraulisch gedämpfter Lager möglich, die Dämpfung und insbesondere die Breitbandigkeit der Dämpfung zu verbessern, ohne daß die Kanallänge erhöht werden muß, was oftmals mit Schwierigkeiten verbunden wäre.

## Ansprüche

1. Hydraulisch dämpfendes Motorlager mit einer, von einer kegelstumpfförmigen elastomeren Tragfeder umgebenen Arbeitskammer und einer, von einer weichelastischen, tassenförmigen Membran begrenzten Ausgleichskammer, die über einen kreisringförmigen Überströmkanal im Bereich einer zwischen den Kammern angeordneten Trennwand hydraulisch miteinander in Verbindung stehen, dadurch gekennzeichnet, daß innerhalb des angenähert rechteckigen Querschnitt aufweisenden Überströmkanals (12) mindestens eine, sich vertikal über eine Teilhöhe des Kanals (12) und in Umfangsrichtung erstreckende stegförmige Zwischenwandung (13;25,26) angeordnet ist.

2. Hydraulisch dämpfendes Motorlager nach Anspruch 1, dadurch gekennzeichnet, daß der Überströmkanal (12) in die einen Teil der Arbeitskammer (1) begrenzende metallische Kammerwandung (9) eingelassen ist und eine sich spiralförmig nach innen zur Arbeitskammer (1) öffnende Eintrittsöffnung (16) und eine, vom Boden des Kanals (12) ausgehende und in die Ausgleichskammer (7) mündende Austrittsöffnung (17) aufweist.

3. Hydraulisch dämpfendes Motorlager nach Anspruch 1, dadurch gekennzeichnet, daß bei Anordnung von zwei oder mehr Zwischenwandungen (25,26) diese parallel und in gleichmäßigen Abständen zur Begrenzung von Teilkanälen gleichen Querschnitts angeordnet sind.

4. Hydraulisch dämpfendes Motorlager nach Anspruch 1 bis 3, dadurch gekennzeichnet, daß im Bereich von Eintritts- und Austrittsöffnung (16,17) die Zwischenwandungen (13) freigeschnitten sind.

FIG.1

FIG.2

FIG.3